# EUROPÄISCHE PATENTSCHRIFT

(11) **EP 3 244 079 B1**
(45) Veröffentlichungstag und Bekanntmachung des Hinweises auf die Patenterteilung: **24.01.2024**
(21) Anmeldenummer: 16169187.8
(22) Anmeldetag: 11.05.2016
(51) Int. Cl.: F16C 11/04, E02F 9/00, F16B 41/00, F16C 11/02

(54) **BOLZENVERBINDUNG UND SCHWENKHEBEL MIT BOLZENVERBINDUNG FÜR BAUMASCHINE**
BOLTED ASSEMBLY AND SWING ARM WITH BOLTED ASSEMBLY FOR CONSTRUCTION MACHINE
ASSEMBLAGE BOULONNE ET LEVIER PIVOTANT COMPRENANT UN ASSEMBLAGE BOULONNE POUR ENGIN DE CHANTIER

(43) Veröffentlichungstag der Anmeldung: 15.11.2017
(73) Patentinhaber: BAUER Maschinen GmbH, 86529 Schrobenhausen (DE)
(72) Erfinder: LANZL, Martin, 85051 Ingolstadt (DE)
(74) Vertreter: Wunderlich & Heim Patentanwälte Partnerschaftsgesellschaft mbB

(56) Entgegenhaltungen:
- EP-A1- 1 980 672
- WO-A1-2010/084012
- DE-A1- 4 102 370
- DE-A1- 19 651 507
- DE-U1- 29 909 329
- GB-A- 2 511 534
- JP-A- 2005 133 507
- US-A- 3 243 066
- US-A- 4 132 290
- US-B1- 6 241 455
- US-B1- 6 332 747
- "Bauer BG 42, Rotary Drilling Rig, Base Carrier BT 110", Brochure of "Bauer Maschinen GmbH" , 1 September 2021 (2021-09-01), Retrieved from the Internet: URL:https://www.bauer.de/export/shared/doc uments/pdf/bma/datenblatter/BG_valueline/B G_42_BT_110_ValueLine_EN_905_875_2.pdf [retrieved on 2021-12-03]

## Beschreibung

Die Erfindung betrifft eine Bolzenverbindung mit einem Lagerbolzen.

Eine solche Bolzenverbindung mit einem Lagerbolzen verbindet ein erstes Bauteil und ein zweites Bauteil schwenkbar miteinander, wobei sich der Lagerbolzen durch mindestens ein erstes Lagerauge an dem ersten Bauteil und mindestens ein zweites Lagerauge an dem zweiten Bauteil erstreckt und wobei der Lagerbolzen zum Lösen der Verbindung zu einer Austrittsseite aus dem ersten Lagerauge und dem zweiten Lagerauge austreibbar ist.

Weiterhin betrifft die Erfindung eine Baumaschine, insbesondere zum Tiefbau.

Ebenfalls betrifft die Erfindung einen Schwenkhebel, insbesondere für eine Baumaschine zum Tiefbau. Ein solcher Schwenkhebel ist ausgebildet, einen Stellzylinder, insbesondere zum Halten eines Masts aufzunehmen.

Bekannte Bolzenverbindungen weisen zumindest zwei, gelenkig miteinander verbundene Bauteile auf, welche mittels eines Bolzens verbunden werden. Um eine Lageveränderung beziehungsweise einem Herausrutschen des Bolzens aus der Bolzenverbindung vorzubeugen, wird der Bolzen in bekannter Weise, vorzugsweise an beiden Seiten des Bolzens, mit einer Bolzensicherung versehen. Beim Eintreiben sowie Austreiben des Bolzens aus einer solchen Bolzenverbindung muss jeder der Bolzen einzeln in die Bolzenverbindung eingeschlagen oder aus der Bolzenverbindung ausgeschlagen werden.

Da es beim Lösen einer Bolzenverbindung insbesondere bei Baumaschinen grundsätzlich der Fall sein kann, das eines der gelösten Bauteile oder der Bolzen selbst herunterfällt, wird es als nachteilig empfunden, dass sich Personal beim Lösen beziehungsweise Schließen einer Bolzenverbindung in der Nähe der Vorrichtung befindet. Weiterhin wird es als nachteilig empfunden, dass es nach den bekannten Verfahren zum Vorsehen oder Lösen einer Vielzahl von Bolzen zu erheblichen Ausfallzeiten der Baumaschine kommen kann.

Beim Eintreiben der Bolzen besteht grundsätzlich die Gefahr, dass ein Bolzen die Bolzenverbindung nicht vollständig schließt, ein Bolzen unsachgemäß gesichert wurde oder sich eine Bolzensicherung im Nachhinein von dem Bolzen wieder löst. Dies stellt ein erhebliches Sicherheitsrisiko dar, welchem bisher nicht zufriedenstellend Rechnung getragen wurde.

Eine schwenkbare Bolzenverbindung ist aus der GB 25 11 534 A bekannt. Es ist ein einzelner loser Lagerbolzen vorgesehen, welcher in der Lagerposition mit einer Sicherungsplatte an einem der Bauteile angeschraubt ist. Nach dem Lösen der Bolzenverbindung ist der Bolzen lose und kann verloren gehen.

Aus der EP 1 980 672 A1 geht eine hydraulische Verriegelungsvorrichtung hervor, bei welcher zwei Hydraulikkolben als Verriegelungsbolzen ausfahrbar gelagert und angetrieben sind.

Die US 6,332,747 B1 und die US 6,241,455 B1 offenbaren Baumaschinen mit einer solchen hydraulischen Verriegelungseinrichtung.

Die WO 2010/084 012 A1 zeigt eine Bolzenverbindung mit einem Lagerbolzen, welcher ein erstes Bauteil und ein zweites Bauteil schwenkbar miteinander verbindet, wobei sich der Lagerbolzen durch mindestens ein erstes Lagerauge an dem ersten Bauteil und mindestens ein zweites Lagerauge an dem zweiten Bauteil erstreckt, und wobei der Lagerbolzen zum Lösen der Verbindung aus dem zweiten Lagerauge austreibbar ist.

Der Erfindung liegt die **Aufgabe** zugrunde, eine Bolzenverbindung mit einem losen

Lagerbolzen insbesondere für eine Baumaschine beziehungsweise einen Schwenkhebel für eine Baumaschine anzugeben, welche ein zuverlässiges und effizientes Öffnen und Schließen der Bolzenverbindung erlaubt, wobei eine besonders hohe Betriebssicherheit der Bolzenverbindung gewährleistet ist.

Die Aufgabe wird nach der Erfindung einerseits durch eine Bolzenverbindung mit den Merkmalen des Anspruchs 1, durch eine Baumaschine mit den Merkmalen des Anspruchs 11 sowie durch einen Schwenkhebel mit den Merkmalen nach Anspruch 13 gelöst.

Vorteilhafte Ausführungsformen sind in den abhängigen Ansprüchen, der Beschreibung und den Figuren angegeben.

Ein Grundgedanke der vorliegenden Erfindung besteht darin, einen Bolzen für eine Bolzenverbindung bereits vor dem Verbinden der Bauteile zumindest dem ersten Bauteil zugeordnet vorzusehen, wobei der Lagerbolzen gegenüber dem Lagerauge des ersten Bauteils vorteilhaft ausgerichtet ist. Hierfür ist eine Schutzaufnahme vorgesehen, welche ausgebildet ist, den Lagerbolzen zu halten und sicher zu lagern. Die erfindungsgemäße Lagerverbindung weist zumindest einen Lagerbolzen und mindestens zwei mit dem Lagerbolzen zu verbindende Bauteile auf.

Die Schutzaufnahme ist, insbesondere an dem ersten Bauteil, an der Austrittsseite des Lagerbolzens angeordnet. Die Austrittsseite ist die Seite, zu welcher der Lagerbolzen die Bolzenverbindung verlassen kann.

Nach einer Weiterbildung der Erfindung ist es bevorzugt, dass der Lagerbozen nach dem Lösen der Verbindung in der Schutzaufnahme koaxial zu dem ersten Lagerauge angeordnet ist. Die Schutzaufnahme ist mit einem Innenraum gebildet, in welchem der Lagerbolzen bei einer gelösten Bolzenverbindung, insbesondere direkt über dem Lagerauge, vorgesehen sein kann. Demnach weist die Schutzaufnahme eine Austrittsöffnung auf, welche insbesondere über dem ersten Lagerauge angeordnet ist. Die Schutzaufnahme kann ausgebildet sein, einer Beschädigung und/oder einer betriebshindernden Verschmutzung des Lagerbolzes vorzubeugen. Eine solche Beschädigung oder Verschmutzung kann insbesondere dazu beitragen, dass ein Formschluss zwischen Bolzen und Lagerauge in der Bolzenverbindung unzureichend hehergestellt wird. Die Schutzaufnahme ist ausgebildet, einem Herausfallen des Lagerbolzens aus der Bolzenverbindung und/oder der Schutzaufnahme vorzubeugen.

Nach einer besonders zweckmäßigen Weiterbildung der Erfindung ist es vorgesehen, dass der Lagerbolzen als Stufenbolzen ausgebildet ist und einen Durchmesser kleineren Bereich aufweist, welcher an einer von der Schutzaufnahme abgewandten Seite ausgebildet ist, und einen Durchmesser größeren Bereich aufweist, welcher an einer der Schutzaufnahme zugewandten Seite ausgebildet ist. Der Stufenbolzen kann insbesondere mit einer Stufenform entlang einer Zylinderrotationsachse des Lagerbolzens vorgesehen sein. Die Lageraugen des ersten beziehungsweise zweiten Bauteils können einen entsprechenden Durchmesser aufweisen, welcher bei einer hergestellten Bolzenverbindung im Wesentlichen dem entsprechenden axialen Abschnitt des Lagerbolzens entspricht, der mit dem Lagerauge in Kontakt steht. Es können also Lageraugen verschiedenen Durchmessers für die Bolzenverbindung vorgesehen werden, wobei der Durchmesser der Lageraugen mit zunehmendem Abstand von der Schutzaufnahme, also in Eintrittsrichtung des Bolzens, abnehmen kann. Der Stufenbolzen kann also im Kontaktbereich mit dem jeweiligen Lagerauge einen im Wesentlichen gleichen Radius aufweisen wie dieses. Durch die Stufenform des Lagerbolzens kann einem Herausfallen des Bolzens aus der Bolzenverbindung zu einer der Schutzaufnahme abgewandten Seite vorgebeugt werden. Hierbei kann es vorteilhaft sein, dass zumindest das Lagerauge, welches von der Schutzaufnahme am weitesten entfernt ist, bei geschlossener Bolzenverbindung von einem Bereich des Lagerbolzens durchdrungen wird, wobei das Lagerauge mit einem benachbarten durchmessergrößeren Bereich des Lagerbolzens in Kontakt steht. So kann einem Verschieben des Lagerbolzens in der Bolzenverbindung zumindest zu der Austrittsseite hin vorgebeugt werden, welche der Schutzaufnahme abgewandt ist.

Für eine besonders sichere Bolzenverbindung ist es nach einer Weiterbildung der Erfindung vorgesehen, dass an der Bolzenverbindung eine Lagesicherung angeordnet ist, welche an den Lagerbolzen radial zustellbar ist. Die Lagesicherung kann insbesondere dazu ausgebildet sein, den Lagerbolzen bezüglich einer unerwünschten Verschiebung entlang seiner Zylinder- beziehungsweise Stufenzylinderachse ortsfest festzulegen. Vorzugsweise kann die Lagesicherung an einer der Schutzaufnahme gegenüber liegenden Seite der Bolzenverbindung vorgesehen sein. Insbesondere bei einer Bolzenverbindung, welche an dem ersten Bauteil mindestens zwei Lageraugen und an dem zweiten Bauteil mindestens zwei Lageraugen aufweist, kann die Lagesicherung auch zwischen zwei Lageraugen der Bolzenverbindung, insbesondere zwischen zwei der Lageraugen des zweiten Bauteils vorgesehen sein. Ist eine solche Lagesicherung zwischen zwei der Lageraugen vorgesehen, kann die Lagesicherung einem Verrutschen beziehungsweise einer Verschiebung des Lagerbolzens entlang seiner Zylinderachse in beide Richtungen vorbeugen.

Besonders bevorzugt ist es nach einer Weiterbildung der Erfindung, dass die Lagesicherung ein Sicherungselement aufweist, welches formschlüssig in eine Ausnehmung an dem Lagerbolzen eingreift. Eine solche Lagesicherung kann beispielsweise eine Bolzensicherung sein, welche in eine entsprechende Haltenut, insbesondere in eine radiale Vertiefung des Lagerbozens, eingreifen kann. Die Bolzensicherung kann nach dem Eingreifen in die Bolzenausnehmung an einem der Bauteile fixiert, insbesondere über eine Schraubverbindung verspannt werden. Sind an den jeweiligen Bauteilen mehrere Lageraugen vorgesehen, kann das Sicherungselement auch in einem Bereich zwischen den Lageraugen vorgesehen werden. Vorzugsweise ist die Lagesicherung insbesondere zwischen den Lageraugen in Form eines radial zustellbaren Sicherungsstempels ausgebildet. Hierbei kann der Stempel insbesondere ein Profil aufweisen, welches im Wesentlichen einem korrespondierenden Profil in dem zu sichernden Bereich des Lagerbolzens entspricht. Vor einem Lösen des Lagerbozens aus der Bolzenverbindung beziehungsweise einem Zuführen des Lagerbolzens zu der Schutzaufnahme kann es zweckmäßig sein, die mindestens eine Lagesicherung von dem Lagerbolzen zu lösen.

Sowohl das Zuführen der Lagesicherung zu dem Lagerbolzen als auch das Lösen der Lagesicherung von dem Lagerbolzen kann sowohl manuell als auch mechanisch, insbesondere durch einen hydraulischen Mechanismus, erfolgen. Insbesondere bei einer hydraulischen angetriebenen Lagesicherung kann ein hydraulischer Zylinder vorgesehen sein, in welchem ein Kolben angeordnet ist, der endseitig einen Sicherungsstempel aufweist. Der Sicherungsstempel kann dem Lagerbolzen mittels des hydraulisch angetriebenen Kolbens zustellbar sein, um eine ortsfeste Sicherung des Lagerbolzens zu ermöglichen.

Nach der Erfindung ist es vorgesehen, dass an der Schutzaufnahme ein Stellglied angeordnet ist, welches ausgebildet ist, die Position des Lagerbolzens zwischen Bolzenverbindung und Schutzaufnahme zu verändern. Mittels des Stellglieds kann der Lagerbolzen zwischen Bolzenverbindung und Schutzaufnahme geführt sein. Das Stellglied kann insbesondere einer ungewollten Veränderung der Position des Lagerbolzens gegenüber den Lageraugen vorbeugen. So kann das Stellglied den Lagerbolzen beispielsweise in der Schutzaufnahme zurückhalten, wodurch einer zufälligen Zuführung des Lagerbolzens zumindest in einer ersten Richtung aus der Schutzaufnahme heraus in Richtung Bolzenverbindung vorgebeugt ist. Weiterhin kann das Stellglied dazu beitragen den Lagerbolzen in der Bolzenverbindung in Position zu halten. In vorteilhafter Weise kann der Lagerbolzen mit dem Stellglied verbunden sein.

Besonders bevorzugt ist an dem Stellglied ein hydraulischer Zylinder angeordnet, mittels welchem das Stellglied in seiner Position veränderbar ist. Der Lagerbolzen kann also über das Stellglied mit dem hydraulischen Zylinder in Verbindung stehen und über diesen angetrieben werden. Der hydraulische Zylinder kann als Doppelzylinder ausgebildet sein, welcher sowohl ein Zuführen als auch ein Herausziehen des Lagerbolzens aus der Bolzenverbindung ermöglichen kann. Der hydraulische Zylinder kann das Stellglied in einer ersten Position halten, in welcher der Bolzen in der Schutzaufnahme angeordnet ist. Durch das Aufrechterhalten eines entsprechenden hydraulischen Drucks in dem hydraulischen Zylinder kann der Bolzen ortsfest in der Schutzaufnahme vorgesehen sein, wobei einem herausfallen des Lagerbolzens aus der Schutzaufnahme vorgebeugt sein kann. Insbesondere durch eine Umkehr des hydraulischen Drucks in dem hydraulischen Zylinder kann das Stellglied aus der ersten Position in eine zweite Position bewegt werden, wodurch der Lagerbolzen der Bolzenverbindung zuführbar ist.

Besonders bevorzugt weist der Bolzen und/oder das Stellglied ein Führungsglied auf, welches zumindest ein Ausfahren des Lagerbolzens aus der Schutzaufnahme in die Bolzenverbindung hinein in einer axialen Richtung des Lagerbolzens koaxial zu den Lageraugen der Bolzenverbindung führt. Das Führungsglied kann bevorzugt in einem Bereich der Schutzaufnahme geführt sein, welche einen begrenzenden Anschlag aufweisen kann, der das Führungsglied in seiner Auslenkung definiert einstellbar beschränkt. So kann ein Herausfahren des Lagerkolbens aus der Schutzaufnahme bis zu einem definierten Punkt einstellbar sein, was ein präzises Zustellen des Lagerbolzens zu der Bolzenverbindung ermöglichen kann. Die voranstehenden Erläuterungen können auch auf das Einfahren des Bolzens in die Schutzaufnahme zutreffen.

Vorzugsweise durchstößt der Lagerbolzen alle Lageraugen der zu verbindenden Bauteile der Bolzenverbindung, wenn die Bolzenführung den Anschlag erreicht. Besonders bevorzugt ragt der Lagerbolzen an einer der Schutzaufnahme gegenüber liegenden Seite aus der Bolzenverbindung heraus. Insbesondere in dem herausragenden Teil des Lagerbolzens kann eine Ausnehmung für die Lagesicherung des Bolzens vorgesehen sein, welche einem unerwünschtem Zurückziehen des Lagerbolzens in die Schutzaufnahme vorbeugen kann.

Nach einer bevorzugten Weiterbildung der Erfindung kann es vorgesehen sein, das an der Bolzenverbindung ein erster Positionsgeber vorgesehen ist, welcher ausgebildet ist, die Position des Lagerbolzens in der Bolzenverbindung zu bestimmen. Der Positionsgeber kann insbesondere ausgebildet sein, eine vollständig hergestellte Bolzenverbindung, in welcher der Bolzen eine zuvor definierte Position einnimmt, zu erkennen. Der Positionsgeber kann die definierte Position des Lagerbolzens in der Bolzenverbindung von zumindest einer anderen Lagerbolzenposition in Axialrichtung entlang der Zylinderachse des Lagerbolzens unterscheiden. Der erste Positionsgeber kann mit einem Steuerungsmodul verbunden sein, welches eine Verwendung der Bolzenverbindung, beziehungsweise der Baumaschine, an welcher die Bolzenverbindung vorgesehen sein kann, erst ermöglicht, wenn das Steuerungsmodul zumindest von dem ersten Positionsgeber ein Signal erhält, dass einer vollständigen Herstellung der Bolzenverbindung entspricht.

Eine vollständige Bolzenverbindung kann insbesondere dann gegeben sein, wenn der Lagerbolzen alle Lageraugen der Bolzenverbindung vollständig durchdringt und formschlüssig mit diesen in Kontakt steht. Der erste Positionsgeber kann insbesondere mit einem Kontaktelement ausgebildet sein, welches mit den Lagerbolzen insbesondere dann in Kontakt steht, wenn die Bolzenverbindung hergestellt ist. Bei entsprechend vordefiniertem Kontakt zwischen dem Kontaktelement des ersten Positionsgebers und dem Lagerbolzen kann der erste Positionsgeber ein Signal an das Steuerungsmodul übermitteln, welches die vollständige Herstellung der Bolzenverbindung bestimmt und die Bolzenverbindung beziehungsweise die Baumaschine, welche die Bolzenverbindung aufweist, zum Betrieb freigibt. Ebenfalls kann durch das Steuerungsmodul ein Benutzersignal erzeugt werden, welches anzeigt, dass die Bolzenverbindung vollständig hergestellt ist.

Für eine besonders sichere Herstellung der Bolzenverbindung ist es nach einer Weiterbildung der Erfindung vorgesehen, dass an der Bolzenverbindung ein zweiter Positionsgeber vorgesehen ist, welcher ausgebildet ist, eine koaxiale Position des mindestens einen Lagerauges zu dem mindestens einen zweiten Lagerauge zu bestimmen. Der zweite Positionsgeber kann insbesondere an dem ersten Bauteil vorgesehen sein und ein Kontaktelement aufweisen, welches durch direkten Kontakt oder indirekt, beispielsweise über einen Kontaktstempel, die Position des zweiten Bauteils relativ zu dem ersten Bauteil, insbesondere vor dem Herstellen der Bolzenverbindung, bestimmen kann. Sobald das zweite Bauteil in dem Bereich der herzustellenden Bolzenverbindung angeordnet wird, kann dieses mit dem Kontaktelement des zweiten Positionsgebers in Kontakt stehen und eine Position des zweiten Bauteils relativ zu dem ersten Bauteil bestimmen.

Besonders bevorzugt ist es nach einer Weiterbildung der Erfindung, dass der zweite Positionsgeber mit einem Steuerungsmodul verbunden ist, welches ausgebildet ist, den Lagerbolzen erst nach einer koaxialen Ausrichtung des mindestens einen ersten Lagerauges und des mindestens einen zweiten Lagerauges für eine Zustellung des Lagerbolzens zu der Bolzenverbindung freizugeben. Der zweite Positionsgeber kann mit demselben Steuerungsmodul wie der erste Positionsgeber verbunden sein. Vor der Freigabe der Zustellung des Lagerbolzens zu der Bolzenverbindung durch das Steuerungsmodul kann der Lagerbolzen in der Schutzaufnahme, beispielsweise durch Verriegelung des hydraulischen Zylinders, welcher das Stellglied betätigt, verhindert sein, aus der Öffnung der Schutzaufnahme zumindest dem ersten Lagerauge zugestellt zu werden. Auch kann ein Schutzzapfen oder eine andere mechanische Sperre vorgesehen sein, welches den Austritt des Lagerkolbens aus der Öffnung der Schutzaufnahme verhindert. Insbesondere kann der zweite Positionsgeber ein Signal an das Steuerungsmodul übermitteln, dass das zweite Bauteil in einer definierten Position gegenüber dem ersten Bauteil vorliegt. Vorzugsweise kann der zweite Positionsgeber ein Signal an das Steuerungsmodul übermitteln, dass die Lageraugen des ersten Bauteils und des zweiten Bauteils zueinander koaxial ausgerichtet sind. Sobald der zweite Positionsgeber ein Signal an das Steuerungsmodul übermittelt, welches einer koaxialen Position der Lageraugen des ersten Bauteils und des zweiten Bauteils entspricht, kann durch das Steuerungsmodul die Verriegelung des Bolzens gelöst werden, wodurch der Lagerbolzen aus der Schutzaufnahme der Bolzenverbindung ungehindert zustellbar sein kann.

Die erfindungsgemäße Baumaschine ist dadurch gekennzeichnet, dass mindestens eine Bolzenverbindung nach einem der Ansprüche 1 bis 10 vorgesehen ist. Die Baumaschine kann insbesondere zum Herstellen von Bohrlöchern beziehungsweise von Wänden und Schlitzwänden vorgesehen sein.

Die erfindungsgemäße Baumaschine kann vorzugsweise einen Mast aufweisen, welcher an einem Trägergerät mit mindestens einer Bolzenverbindung schwenkbar angeordnet ist. Die Bolzenverbindung kann insbesondere in einem unteren Bereich des Masts angeordnet sein, wodurch der Mast an der Baumaschine gelenkig angeordnet ist. Insbesondere kann der Mast mittels der Bolzenverbindung zwischen einer horizontalen Position und einer vertikalen Position verschwenkbar sein.

Der erfindungsgemäße Schwenkhebel, insbesondere für eine Baumaschine zum Tiefbau ist dadurch gekennzeichnet, dass mindestens eine Bolzenverbindung nach einem der Ansprüche 1 bis 10 vorgesehen ist. Der Schwenkhebel kann an der Baumaschine insbesondere dazu vorgesehen sein, einen Mast mit der Baumaschine über mindestens einen Stellzylinder zu verbinden. Dazu kann der Schwenkhebel an der Baumaschine vorgesehen sein und zumindest eine Aufnahme für mindestens einen Stellzylinder aufweisen, welcher sowohl an dem Schwenkhebel als auch an dem Mast jeweils endseitig angelenkt sein kann. Hierdurch kann ein geführtes Schwenken des Mastes zwischen beispielsweise der horizontalen Position und der vertikalen Position ermöglicht sein. Weiterhin kann der Schwenkhebel den Mast mit einem definiert einstellbaren Neigungswinkel an der Baumaschine ortsfest vorsehen. Die erfindungsgemäße Bolzenverbindung kann hierbei eine zuverlässige, gelenkige Anbindung des Stellzylinders an der Baumaschine ermöglichen.

Die Erfindung wird nachfolgend anhand der beigefügten, schematischen Zeichnung weiter erläutert. In der Zeichnung zeigt:
- Fig. 1: einen Lagerbolzen für eine erfindungsgemäße Bolzenverbindung,
- Fig. 2: eine erfindungsgemäße offene Bolzenverbindung mit Schutzaufnahme mit einem Lagerbolzen in einer ersten Position,
- Fig. 3: eine erfindungsgemäße geschlossene Bolzenverbindung mit Schutzaufnahme mit einem Lagerbolzen in einer zweiten Position,
- Fig. 4: einen Schwenkhebel mit zwei erfindungsgemäßen Bolzenverbindungen.

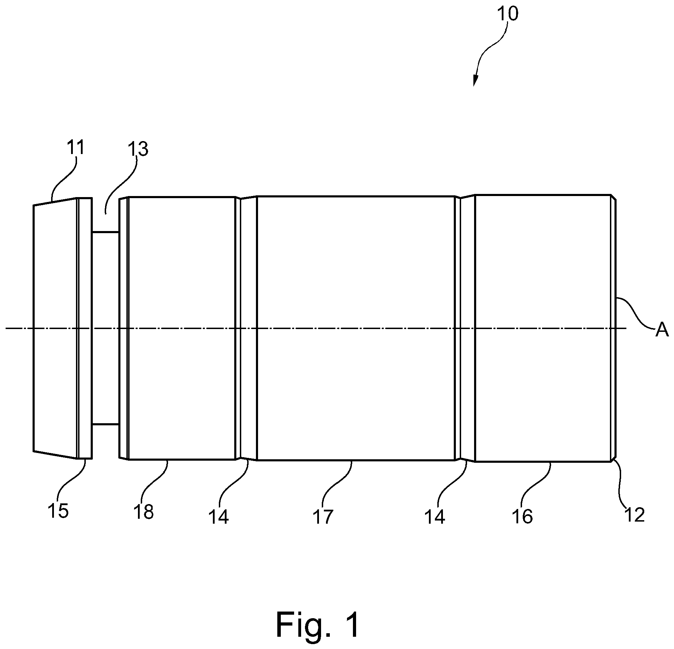

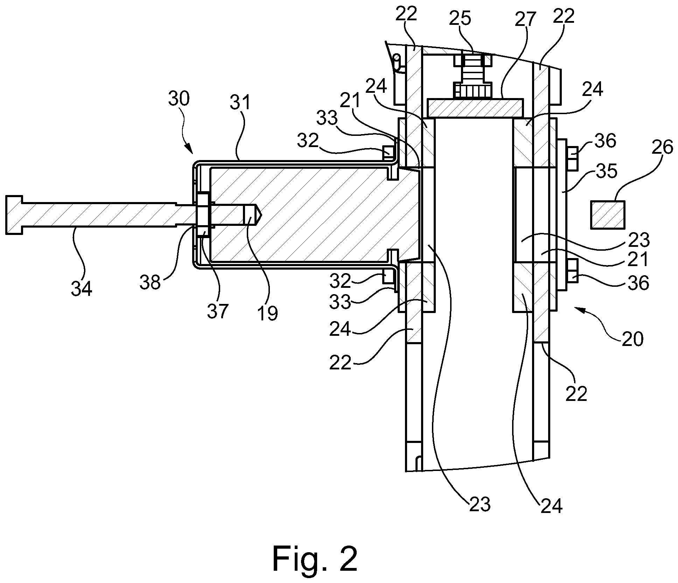

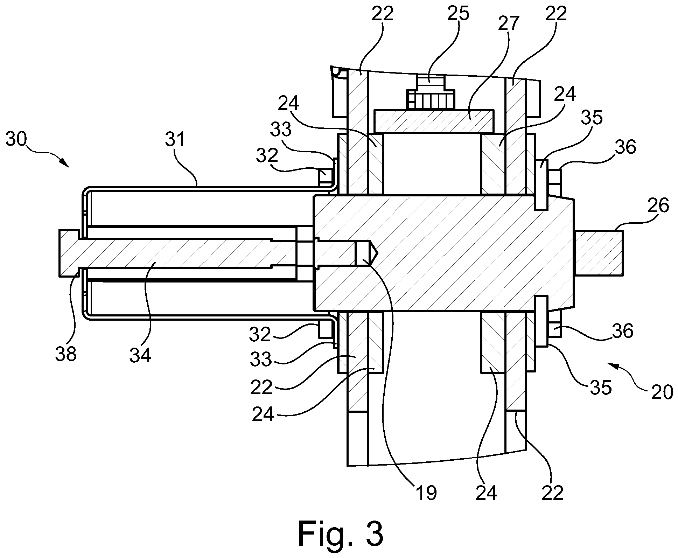

Fig. 1 zeigt einen Lagerbolzen 10 für eine erfindungsgemäße Bolzenverbindung 20 wie in Fig. 2 und 3 dargestellt. Dieser kann einen konischen Bereich 11 aufweisen, welcher in einem vorderen Bereich des Lagerbolzens vorgesehen sein kann. Entlang des Lagerbolzens 10 kann sich an den konischen Bereich 11 ein zylinderförmiger Bereich 15 anschließen, welcher gemeinsam mit dem konischen Bereich 11 einen Kopfbereich des Lagerbolzens 10 bilden kann. Der Lagerbolzen 10 kann einen Grundkörper aufweisen, welcher insbesondere dreiteilig ausgebildet sein kann. Ein solcher dreiteilig ausgebildeter Lagerbolzengrundkörper kann einen ersten Bereich 16 aufweisen, welcher an einem hinteren Ende 12 des Lagerbolzens 10 vorgesehen ist. An den hinteren Bereich 16 kann sich ein mittlerer Bereich 17 anschließen, der zwischen dem hinteren Bereich 16 und einem vorderen Bereich 18 des Lagerbolzengrundkörpers vorgesehen sein kann.

Zwischen den einzelnen Bereichen des Lagerbolzengrundkörpers 16, 17 und 18 können stufenförmig ausgebildete Vertiefungen 14 vorgesehen sein, die als Profilvertiefungen ausgebildet sein können. Insbesondere kann der Durchmesser der einzelnen Bereiche 16, 17 und 18 des Lagerbolzengrundkörpers von hinten nach vorne abnehmen. Demnach kann ein hinterer Bereich 16 des Lagerbolzengrundkörpers einen großen Durchmesser aufweisen, der mittlere Bereich 17 des Lagerbolzengrundkörpers einen mittleren Durchmesser aufweisen und der vordere Bereich 18 einen kleinen Durchmesser aufweisen. Der Durchmesser des zylindrischen Bereichs 15 kann insbesondere durchmessergleich mit dem vorderen Bereich 18 des Lagerbolzengrundkörpers ausgebildet sein, kann jedoch auch durchmesserkleiner gebildet sein. Zwischen dem Lagerbolzengrundkörper und einem Lagerbolzenkopf, welcher insbesondere den vorderen konischen Bereich 11 und den vorderen zylindrischen Bereich 15 aufweisen kann, kann eine Haltenut 13 vorgesehen sein, in welche formschlüssig eine Lagesicherung beziehungsweise Bolzensicherung eingreifen kann. Die Bolzensicherung kann der Haltenut 13, insbesondere radial zugestellt werden. Die profilierten Übergangsbereiche 14 entlang des Lagerbolzengrundkörpers können insbesondere dazu ausgebildet sein, eine Lagesicherung des Bolzens 10 in einer Bolzenverbindung aufzunehmen, wodurch einem Verschieben des Lagebolzens 10 in der Bolzenverbindung entlang zumindest einer axialen Richtung, insbesondere entlang der Längsachse A des Lagerbolzens vorgebeugt werden kann. Zwar befindet sich der Lagerbolzen 10 nach Fig. 2 rig.1 noch zumindest in dem ersten Lagerauge, während der Lagerbolzen in der Schutzaufnahme vorgesehen ist. Der Lagerbolzen kann jedoch ohne Weiteres so vorgesehen sein, dass dieser in seiner Rückzugsposition in der Schutzaufnahme 30 aus allen Lageraugen zurückgezogen ist.

In Fig. 2 ist eine erfindungsgemäße Bolzenverbindung 20 abgebildet. Diese weist ein erstes Bauteil 22 und ein zweites Bauteil 24 auf. An dem ersten Bauteil 22 ist mindest ein erstes Lagerauge 21 und an dem zweiten Bauteil 24 zumindest ein zweites Lagerauge 23 vorgesehen.

Nach Fig. 2 sind die Lageraugen 21, 23 des ersten Bauteils und des zweiten Bauteils koaxial ausgerichtet und die Bolzenverbindung 20 geöffnet, wobei der Lagerbolzen 10 das erste Bauteil 22 und das zweite Bauteil 24 nicht miteinander verbindet. Der Lagerbolzen 10 ist nach Fig. 2 in einer Schutzaufnahme 30 vorgesehen, welche auf einer Außenseite des ersten Bauteils 22 vorgesehen ist. Die Schutzaufnahme 30 weist ein Gehäuse 31 auf, welches den Lagerbolzen 10 entlang des Zylindermantels zumindest bereichsweise, vorzugsweise vollständig, bedecken kann. Hierdurch kann der Lagerbolzen 10 gegenüber einem seitlichen Herausfallen aus der Schutzaufnahme 30 gesichert werden. Das Gehäuse 31 der Schutzaufnahme 30 kann über einen Verbindungsbereich 33 an dem ersten Bauteil ortsfest vorgesehen sein. Vorzugsweise ist der Verbindungsbereich 33 parallel zu dem ersten Bauteil 22 ausgebildet. Zum Befestigen der Schutzaufnahme 30 kann ein Verbindungselement 32, insbesondere in Form einer Schraube oder Nut, bereitgestellt sein, welches den Verbindungsbereich 33 und das erste Bauteil 22 fest miteinander verbinden kann. Die Schutzaufnahme 30 kann auf das erste Bauteil 22 aufgeschweißt sein.

In einem dem ersten Bauteil 22 abgewandten Bereich der Schutzaufnahme 30 ist ein Stellglied 34 vorgesehen, welches durch eine Öffnung 38 in dem Gehäuse 31 dem Lagerbolzen 10 zustellbar ist. Der Lagerbolzen 10 kann insbesondere mit einer Ausnehmung 19 ausgebildet sein, der dann ebenfalls auf einer dem ersten Bauteil 22 abgewandten Seite des Lagerbolzens ausgebildet ist.

Das Stellglied 34 kann mit einem vorderen Ende in die Ausnehmung 19 am Lagerbolzen 10 eingreifen. Hierbei kann das Stellglied 34 mit einem Stempel 37 ausgebildet sein, welcher axial verstellbar auf dem Stellglied 34 angeordnet sein kann. Der Stempel 37 kann auf dem Stellglied 34 in seiner Position veränderbar vorgesehen sein und beispielsweise mit einem Innengewinde ausgebildet sein, welches entlang eines Außengewindes des Stellglieds 34 positionsgenau auf dem Stellglied 34 vorsehbar sein kann. Über den axial verstellbaren Stempel 37 kann eine Verstelltiefe des Lagerbolzens 10 aus der Schutzaufnahme 30 in Richtung Bolzenverbindung 20 definiert werden.

Hierdurch kann insbesondere die Position des Lagerbolzens 10 in Schutzaufnahme und Bolzenverbindung eingestellt werden. Das Stellglied 34 wird durch die Öffnung 38 dem Innenbereich der Schutzaufnahme 30 zugeführt, wobei mit sukzessiver Zustellung des Stellglieds 34 der Lagerbolzen 10 den koaxial ausgerichteten Lageraugen 21, 23 des ersten und zweiten Bauteils zugeführt werden kann.

An einem der Schutzaufnahme 30 gegenüberliegenden Seiten der offenen Bolzenverbindung 20 kann eine Bolzensicherung 35 vorgesehen sein, welche eine Bolzensicherungsbefestigung 36 aufweist. Die Bolzensicherungsbefestigung 36 kann insbesondere in Form einer Schraubverbindung oder einer anderen, bevorzugt lösbaren Verbindung an dem ersten Bauteil vorgesehen sein. In dem Bereich der Bolzenverbindung 20, welche der Schutzaufnahme 30 abgewandt ist, kann ein erster Positionsgeber 26 vorgesehen sein, der die Position des Lagerbolzens 10 in der Bolzenverbindung 20 bestimmen kann.

In einem Bereich oberhalb der Lageraugen 21, 23 kann ein zweiter Positionsgeber 25 vorgesehen sein, welcher insbesondere dazu ausgebildet sein kann, die Position des zweiten Bauteils in Relation zum ersten Bauteil zu bestimmen. Der zweite Positionsgeber 25 kann insbesondere dazu ausgebildet sein eine koaxiale Ausrichtung der Lageraugen 21, 23 des ersten Bauteils 22 mit dem zweiten Bauteil 24 zu bestimmen. An dem zweiten Positionsgeber 25 kann ein Stempel 27 vorgesehen sein, welcher bei einem Ausrichten des ersten Bauteils 22 gegenüber dem zweiten Bauteil 24 insbesondere mit dem zweiten Bauteil 24 in Berührung kommt. Der Stempel 27 kann an einem Kontaktelement des zweiten Positionsgebers 25 angeordnet sein und diesen insbesondere beim koaxialen Ausrichten der Bauteile 22, 24 verstellen. Hierdurch kann die relative Position des zweiten Bauteils 24 gegenüber dem ersten Bauteil 22 bestimmbar sein. Hierfür kann der zweite Positionsgeber 25 insbesondere an dem ersten Bauteil vorgesehen sein.

Fig. 3 zeigt eine erfindungsgemäße Bolzenverbindung 20, bei welcher der Lagerbolzen 10 das erste Bauteil 22 und das zweite Bauteil 24 durchdringt und miteinander verbindet. Hierbei ist der Lagerbolzen 10 formschlüssig in den Lageraugen 21, 23 gemäß Fig. 2 vorgesehen. Der Lagerbolzen 10, welcher vorzugsweise als Stufenbolzen ausgebildet ist, kann in den einzelnen Bereichen des Zylindermantels jeweils im Wesentlichen einen gleichen Radius aufweisen wie das Lagerauge, mit dem der Bereich in Kontakt steht.

Besonders bevorzugt stehen benachbarte Lageraugen 21, 23 des ersten Bauteils 22 und des zweiten Bauteils 24 mit einem durchmessergleichen Bereich des Lagerbolzens 10 im Kontakt. Der Lagerbolzen 10 nach Fig. 3 wurde gegenüber Fig. 2 mittels des Stellglieds 34 aus der Schutzaufnahme 30 in einer axialen Richtung den koaxial ausgerichteten Lageraugen 21, 23 zugestellt. Wie aus den Figuren 2 und 3 hervorgeht, können das erste Bauteil 22 und das zweite Bauteil 24 mehrteilig ausgebildet sein, wobei jedes der Bauteile mehr als ein Lagerauge aufweisen kann. Das Stellglied 34 weist in einem Endbereich, welcher dem Lagerbolzen 10 abgewandt ist, einen Randbereich auf, welcher durchmessergrößer ist als die Öffnung 38 in dem Gehäuse 31 der Schutzaufnahme 30, wodurch das Zuführen des Stellglieds 34 in das Gehäuse 31 seiner Tiefe nach beschränkt ist.

Durch eine bedarfsgerechte Voreinstellung des Stempels 37 am Stellglied 34 kann eine Position des Lagerbolzens 10 bei vollständig eingeführtem Stellglied 34 definiert einstellbar sein.

Bei einem vollständig eingeführten Stellglied 34 kann der durchmessergrößere Randbereich des Stellglieds 34 mit dem Gehäuse 31 der Schutzaufnahme 30 in Kontakt stehen, wodurch ein weiteres Zuführen des Stellglieds 34 verhindert ist.

Nach Fig. 3 ist der Lagerbolzen 10 der Bolzenverbindung 20 vollständig zugestellt. In dieser Position kann der Lagerbolzen 10 mittels der Bolzensicherung 35 gegenüber einem axialen Verschieben des Lagerbolzens 10 gesichert werden. Zur Befestigung der Bolzensicherung 35 kann zumindest die Bolzensicherungsbefestigung 36 vorgesehen sein, welche die Bolzensicherung 35 ortsfest an dem ersten Bauteil 22 vorsieht.

Über den ersten Positionsgeber 26 kann eine axiale Position des Lagerbolzens 10 bestimmbar sein. Der erste Positionsgeber 26 und der zweite Positionsgeber 25 können mit einem Steuerungsmodul verbunden sein, welche nicht in den Figuren dargestellt ist.

Beim Herstellen der Bolzenverbindung 20 sowie bei geschlossener Bolzenverbindung können der erste Positionsgeber 26 und der zweite Positionsgeber 25 Positionsdaten der Bauteile 22, 24 zueinander sowie die Position des Lagerbolzens 10 zu der Bolzenverbindung 20 an das Steuerungsmodul senden. Das Steuerungsmodul kann dazu ausgebildet sein, ein Zuführen des Lagerbolzens 10 zu der Bolzenverbindung 20 erst dann zu ermöglichen beziehungsweise eine Aufforderung zum Zustellen des Bolzens 10 auszugeben, wenn der zweite Positionsgeber 25 ein Positionssignal des zumindest zweiten Bauteils 24 relativ zu dem ersten Bauteil 22 übermittelt, welches einer koaxialen Ausrichtung des mindestens einen ersten Lagerauges 21 und des mindestens einen zweiten Lagerauges 23 entspricht.

Sobald eine koaxiale Ausrichtung des zumindest einen ersten Lagerauges 21 und des mindestens einen zweiten Lagerauges 23 durch das Steuerungsmodul erkannt wurde, kann ein Signal an den Bediener der Baumaschine übermittelt werden, dass der Lagerbolzen der Bolzenverbindung 20 zustellbar ist. Alternativ kann auch ein entsprechendes Signal an das Stellglied 34 übermittelt werden, eine Zustellung des Lagerbolzens 10 an die Bolzenverbindung 20 durchzuführen. Hierzu kann das Stellglied 34 mechanisch oder hydraulisch, insbesondere über einen hydraulischen Kolben, bewegt werden, welcher nicht in den Figuren dargestellt ist. So kann das Stellglied 34 ohne manuellen Eingriff an der Bolzenverbindung 20 dem Gehäuse 31 zuführbar sein und der Lagerbolzen 10 aus der Schutzaufnahme 30 in die Bolzenverbindung 20 eingeschoben werden. Sobald der erste Positionsgeber 26 beim Zuführen des Lagerbolzens 10 zur Bolzenverbindung 20 eine definierte Position des Lagerbolzens 10 erkennt, kann dieser an das Steuerungsmodul ein Signal senden, dass der Lagerbolzen 10 bestimmungsgemäß zugeführt wurde und die Bolzenverbindung 20 hergestellt ist. Anschließend kann eine Sicherung der Bolzenverbindung erfolgen.

Die mechanische Vorrichtung, insbesondere der hydraulische Kolben kann ebenfalls ausgebildet sein, das Stellglied 34 aus dem Gehäuse 31 zumindest teilweise wieder herauszuziehen. Mit dem Stellglied 34 kann auch der mit dem Stellglied 34 verbundene Lagerbolzen 10 der Schutzaufnahme 30 aus der Bolzenverbindung 20 wieder herausziehbar sein. Hierzu kann insbesondere ein hydraulischer Doppelzylinder vorgesehen sein, welcher sowohl zum Einfahren als auch Herausziehen des Stellglieds 34 aus dem Gehäuse 31 der Schutzaufnahme 30 ausgebildet sein kann.

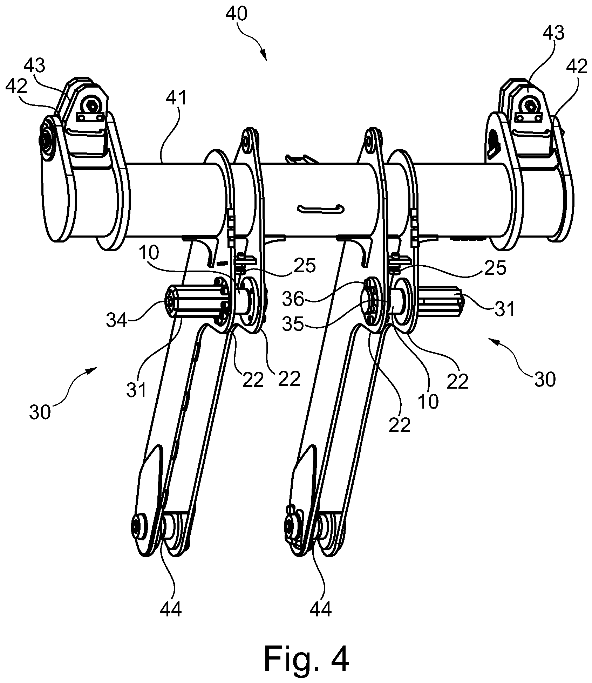

Fig. 4 zeigt einen Schwenkhebel 40, an welchem mindestens eine erfindungsgemäße Schutzaufnahme 30 angeordnet ist.

Die Schutzaufnahme 30 ist nach Fig. 4 ohne hydraulischen Kolben oder eine andere mechanische Vorrichtung zum verstellen des Stellglieds 34 dargestellt, kann solche jedoch aufweisen. Die Schutzaufnahme 30 ist an einem ersten Bauteil 22 angeordnet, wobei der Lagerbolzen 10 aus der

Schutzeinrichtung 30 ausgefahren ist und über die Bolzensicherung 35 mit der Bolzensicherungsbefestigung 36 gegenüber einer axialen Verschiebung des Lagerbolzens 10 gesichert ist. In einem oberen Bereich des Schwenkhebels 40 kann ein Querträger 41 angeordnet sein, an welchem endseitig zumindest eine weitere Bolzenverbindung 42 vorgesehen sein kann. Nach Fig. 4 kann in der Bolzenverbindung 42 eine Aufnahme 43 insbesondere für einen Stellzylinder vorgesehen sein. Ein solcher Stellzylinder kann beispielsweise zum Ausrichten und Halten eines Mastes einer Baumaschine vorgesehen sein.

Am unteren Ende des Schwenkhebels 40 kann eine weitere Bolzenverbindung 44 vorgesehen sein, an welcher beispielsweise ein Mast an einem unteren Ende schwenkbar angeordnet sein kann. Mindestens eine der B+e-Bolzenverbindungen nach Fig. 4 ist als erfindungsgemäße Bolzenverbindung 20 ausgebildet.

## Patentansprüche

1. Bolzenverbindung (20) mit einem Lagerbolzen (10), welcher ein erstes Bauteil (22) und ein zweites Bauteil (24) schwenkbar miteinander verbindet, wobei sich der Lagerbolzen (10) durch mindestens ein erstes Lagerauge (21) an dem ersten Bauteil (22) und mindestens ein zweites Lagerauge (23) an dem zweiten Bauteil (24) erstreckt, und wobei der Lagerbolzen (10) zum Lösen der Verbindung zu einer Austrittsseite aus dem ersten Lagerauge (21) und dem zweiten Lagerauge (23) austreibbar ist,
wobei an der Austrittsseite eine Schutzaufnahme (30) mit einem Gehäuse (31) gegen ein Herausfallen des gelösten Lagerbolzens (10) angeordnet ist, wobei die Schutzaufnahme (30) zum Aufnehmen und Lagern des ausgetriebenen Lagerbolzens (10) ausgebildet ist,
wobei in einem dem ersten Bauteil (22) abgewandten Bereich der Schutzaufnahme (30) ein Stellglied (34) angeordnet ist, welches ausgebildet ist, die Position des Lagerbolzens (10) zwischen Bolzenverbindung (20) und Schutzaufnahme (30) zu verändern,
wobei das Stellglied (34) mit dem Lagerbolzen (10) verbunden und zusammen mit dem Lagerbolzen (10) zwischen einer ersten Position, in welcher die Bolzenverbindung (20) offen ist, und einer zweiten Position, in welcher die Bolzenverbindung (20) geschlossen ist, verstellbar ist, und
wobei das Stellglied (34) durch eine Öffnung (38) in dem Gehäuse (31) der Schutzaufnahme (30) dem Innenbereich der Schützaufnahme (30) zugeführt ist und in seinem dem Lagerbolzen (10) abgewandten Endbereich einen Randbereich aufweist, der durchmessergrößer als die Öffnung (38) ist, wodurch das Zuführen des Stellglieds (34) in das Gehäuse (31) beschränkt ist.

2. Bolzenverbindung nach Anspruch 1,
**dadurch gekennzeichnet,**
**dass** der Lagerbolzen (10) nach dem Lösen der Verbindung in der Schutzaufnahme (30) koaxial zu dem ersten Lagerauge (21) angeordnet ist.

3. Bolzenverbindung nach einem der Ansprüche 1 und 2,
**dadurch gekennzeichnet,**
**dass** der Lagerbolzen (10) als Stufenbolzen ausgebildet ist und einen Durchmesser kleineren Bereich (18) aufweist, welcher an einer von der Schutzaufnahme (30) abgewandten Seite ausgebildet ist, und einen Durchmesser größeren Bereich (16) aufweist, welcher an einer der Schutzaufnahme (30) zugewandten Seite ausgebildet ist.

4. Bolzenverbindung nach einem der Ansprüche 1 bis 3,
**dadurch gekennzeichnet,**
**dass** an der Bolzenverbindung (20) eine Lagesicherung angeordnet ist, welche dem Lagerbolzen (10) radial zustellbar ist.

5. Bolzenverbindung nach einem der Ansprüche 1 bis 4,
**dadurch gekennzeichnet,**
**dass** die Lagesicherung ein Sicherungselement (35) aufweist, welches formschlüssig, in eine Ausnehmung (13) an dem Lagerbolzen (10) eingreift.

6. Bolzenverbindung nach einem der Ansprüche 1 bis 5,
**dadurch gekennzeichnet,**
**dass** der Lagerbolzen (10) mittels des Stellglieds (34) zwischen der Bolzenverbindung und der Schutzaufnahme (30) geführt ist.

7. Bolzenverbindung nach einem der Ansprüche 1 bis 6,
**dadurch gekennzeichnet,**
**dass** an dem Stellglied (34) ein hydraulischer Zylinder angeordnet ist, mittels welchem das Stellglied (34) in seiner Position veränderbar ist.

8. Bolzenverbindung nach einem der Ansprüche 1 bis 7,
**dadurch gekennzeichnet,**
**dass** an der Bolzenverbindung (20) ein erster Positionsgeber (26) vorgesehen ist, welcher ausgebildet ist, die Position des Lagerbolzens (10) in der Bolzenverbindung (20) zu bestimmen.

9. Bolzenverbindung nach einem der Ansprüche 1 bis 8,
**dadurch gekennzeichnet,**
**dass** an der Bolzenverbindung (10) ein zweiter Positionsgeber (25) vorgesehen ist, welcher ausgebildet ist, eine koaxiale Position des mindestens einen ersten Lagerauges (21) zu dem mindestens einen zweiten Lagerauge (23) zu bestimmen.

10. Bolzenverbindung nach Anspruch 9,
**dadurch gekennzeichnet,**
**dass** der zweite Positionsgeber (25) mit einem Steuerungsmodul verbunden ist, welches ausgebildet ist, den Lagerbolzen (10) erst nach einer koaxialen Ausrichtung des mindestens einen ersten Lagerauges (21) und des mindestens einen zweiten Lagerauges (23) für eine Zustellung des Lagerbolzens (10) zu der Bolzenverbindung (20) freizugeben.

11. Baumaschine, insbesondere zum Tiefbau,
**dadurch gekennzeichnet,**
**dass** mindestens eine Bolzenverbindung (20) nach einem der Ansprüche 1 bis 10, vorgesehen ist.

12. Baumaschine nach Anspruch 11,
**dadurch gekennzeichnet,**
**dass** ein Mast an einem Trägergerät mit der mindestens einen Bolzenverbindung (20) schwenkbar angelenkt ist.

13. Schwenkhebel (40), insbesondere für eine Baumaschine zum Tiefbau, welcher ausgebildet ist, Stellzylinder, insbesondere zum Halten eines Masts, aufzunehmen,
**dadurch gekennzeichnet,**
**dass** mindestens eine Bolzenverbindung (20) nach einem der Ansprüche 1 bis 10 vorgesehen ist.

## Claims

1. Bolt connection (20) with a bearing bolt (10), which connects a first component (22) and a second component (24) pivotably to each other, wherein the bearing bolt (10) extends through at least one first bearing eye (21) on the first component (22) and at least one second bearing eye (23) on the second component (24), and wherein the bearing bolt (10), for releasing the connection, can be driven at an exit side out of the first bearing eye (21) and the second bearing eye (23),
wherein a protective receptacle (30) is arranged on the exit side with a housing (31) to prevent the loosened bearing pin (10) from falling out, wherein the protective receptacle (30) is designed to receive and accommodate the driven-out bearing bolt (10),
wherein in an area facing away from the first component (22) of the protective receptacle (30) an actuator (34) is arranged, which actuator is designed to change the position of the bearing bolt (10) between the bolt connection (20) and the protective receptacle (30), and
wherein the actuator (34) is connected to the bearing bolt (10) and is adjustable together with the bearing bolt (10) between a first position, in which the bolt connection (20) is open, and a second position, in which the bolt connection (20) is closed, and
wherein the actuator (34) is fed to the interior of the protective receptacle (30) through an opening (38) in the housing (31) of the protective receptacle (30) and has, in its end region facing away from the bearing bolt (10), an edge region which is larger in diameter than the opening (38), whereby the feeding of the actuator (34) into the housing (31) is restricted.

2. Bolt connection according to claim 1,
**characterised in that**
the bearing bolt (10) is arranged, after release of the connection, in the protective recess (30) coaxially to the first bearing eye (21).

3. Bolt connection according to one of claims 1 and 2,
**characterised in that**
the bearing bolt (10) is designed as a step bolt and has an area (18) with a smaller diameter which is formed at a side facing away from the protective receptacle (30), and has an area (16) with a larger diameter which is formed at a side facing towards the protective receptacle (30).

4. Bolt connection according to one of claims 1 to 3,
**characterised** n that
a position-securing means is arranged on the bolt connection (20) which can be moved radially to the bearing bolt (10).

5. Bolt connection according to one of claims 1 to 4,
**characterised in that**
the position-securing means has a securing element (35) which engages in a positive locking way in a recess (13) on the bearing bolt (10).

6. Bolt connection according to one of claims 1 to 5,
**characterised in that**
that the bearing bolt (10) is guided between the bolt connection and the protective receptacle (30) by means of the actuator (34).

7. Bolt connection according to one of claims 1 to 6,
**characterised in that**
a hydraulic cylinder is arranged on the adjusting member (34), by means of which the adjusting member (34) can be changed in its position.

8. Bolt connection according to one of claims 1 to 7,
**characterised in that**
a first position sensor (26) is provided on the bolt connection (20), which is designed to determine the position of the bearing bolt (10) in the bolt connection (20).

9. Bolt connection according to one of claims 1 to 8,
**characterised in that**
a second position sensor (25) is provided on the bolt connection (10), which is designed to determine a coaxial position of the at least one first bearing eye (21) relative to the at least one second bearing eye (23).

10. Bolt connection according to claim 9,
**characterised in that**
the second position sensor (25) is connected to a control module, which is designed to release the bearing bolt (10), only after a coaxial orientation of the at least one first bearing eye (21) and the at least one second bearing eye (23), for a movement of the bearing bolt (10) to the bolt connection (20).

11. Construction machine, in particular for civil engineering,
**characterised in that**
at least one bolt connection (20) according to one of claims 1 to 10 is provided.

12. Construction machine according to claim 11,
**characterised in that**
a mast is pivotably attached to a support device with the at least one bolt connection (20).

13. Swivel lever (40), in particular for a construction machine for civil engineering, which is designed to receive actuating cylinders, in particular for holding a mast, characterised n that
at least one bolt connection (20) according to one of claims 1 to 10 is provided.

## Revendications

1. Assemblage boulonné (20) avec un boulon de palier (10), lequel assemble de manière à pouvoir pivoter un premier composant (22) et un deuxième composant (24) l'un à l'autre, dans lequel le boulon de palier (10) s'étend sur le premier composant (22) à travers au moins un premier oeillet de montage (21) et sur le deuxième composant (24) à travers au moins un deuxième oeillet de montage (23), et dans lequel le boulon de palier (10) peut être sorti hors du premier oeillet de montage (21) et du deuxième oeillet de montage (23) vers un côté de sortie pour desserrer l'assemblage, dans lequel un réceptacle de protection (30) avec un boîtier (31) est disposé sur le côté de sortie pour empêcher toute chute du boulon de palier (10) desserré, le réceptacle de protection (30) étant conçu pour loger et monter le boulon de palier (10) sorti,
dans lequel est disposé, dans une zone du réceptacle de protection (30) opposée au premier composant (22), un organe de réglage (34) qui est conçu pour modifier la position du boulon de palier (10) entre l'assemblage boulonné (20) et le réceptacle de protection (30),
dans lequel l'organe de réglage (34) est relié au boulon de palier (10) et peut être ajusté conjointement avec le boulon de palier (10) entre une première position, dans laquelle l'assemblage boulonné (20) est ouvert, et une deuxième position, dans laquelle l'assemblage boulonné (20) est fermé,
et dans lequel l'organe de réglage (34) est amené à la zone intérieure du réceptacle de protection (30) par une ouverture (38) dans le boîtier (31) du réceptacle de protection (30) et présente, dans sa zone d'extrémité opposée au boulon de palier (10), une zone de bord dont le diamètre est plus grand que l'ouverture (38), ce qui permet de limiter l'amenée de l'organe de réglage (34) dans le boîtier (31).

2. Assemblage boulonné selon la revendication 1,
**caractérisé en ce que** le boulon de palier (10) est disposé de manière coaxiale par rapport au premier oeillet de montage (21) dans le réceptacle de protection (30) après le desserrage de l'assemblage.

3. Assemblage boulonné selon l'une quelconque des revendications 1 et 2, **caractérisé en ce que** le boulon de palier (10) est réalisé en tant qu'un boulon étagé et présente une zone (18) à diamètre inférieur, laquelle est réalisée sur un côté opposé au réceptacle de protection (30), et présente une zone (16) à diamètre supérieur, laquelle est réalisée sur un côté tourné vers le réceptacle de protection (30).

4. Assemblage boulonné selon l'une quelconque des revendications 1 à 3, **caractérisé en ce que**, sur l'assemblage boulonné (20), un système de blocage en position est disposé en pouvant être engagé radialement sur le boulon de palier (10).

5. Assemblage boulonné selon l'une quelconque des revendications 1 à 4, **caractérisé en ce que** le système de blocage en position présente un élément de blocage (35), lequel vient en prise par complémentarité de forme avec un évidement (13) sur le boulon de palier (10).

6. Assemblage boulonné selon l'une quelconque des revendications 1 à 5, **caractérisé en ce que** le boulon de palier (10) est guidé entre l'assemblage boulonné et le réceptacle de protection (30) au moyen de l'organe de réglage (34).

7. Assemblage boulonné selon l'une quelconque des revendications 1 à 6, **caractérisé en ce que** la position de l'organe de réglage (34) peut être modifiée au moyen d'un cylindre hydraulique disposé sur l'organe de réglage (34).

8. Assemblage boulonné selon l'une quelconque des revendications 1 à 7, **caractérisé en ce qu'**une première sonde de position (26) est prévue sur l'assemblage boulonné (20), laquelle est réalisée pour définir la position du boulon de palier (10) dans l'assemblage boulonné (20).

9. Assemblage boulonné selon l'une quelconque des revendications 1 à 8, **caractérisé en ce qu'**une deuxième sonde de position (25) est prévue sur l'assemblage boulonné (10), laquelle est réalisée pour définir une position coaxiale de l'au moins un premier oeillet de montage (21) par rapport à l'au moins un deuxième oeillet de montage (23).

10. Assemblage boulonné selon la revendication 9,
**caractérisé en ce que** la deuxième sonde de position (25) est reliée à un module de commande, lequel est réalisé pour libérer le boulon de palier (10) seulement après une orientation coaxiale de l'au moins un premier oeillet de montage (21) et de l'au moins un deuxième oeillet de montage (23) pour un rapprochement du boulon de palier (10) à l'assemblage boulonné (20).

11. Engin de construction, en particulier de travaux de génie civil,
**caractérisé en ce qu'**au moins un assemblage boulonné (20) selon l'une quelconque des revendications 1 à 10 est prévu.

12. Engin de construction selon la revendication 11,
**caractérisé en ce qu'**un mât est articulé de manière à pouvoir pivoter avec l'au moins un assemblage boulonné (20) sur un appareil de support.

13. Levier de pivotement (40), en particulier pour un engin de construction de travaux de génie civil, lequel est réalisé pour loger des cylindres de réglage, en particulier pour maintenir un mât,
**caractérisé en ce qu'**au moins un assemblage boulonné (20) selon l'une quelconque des revendications 1 à 10 est prévu.
